# EUROPÄISCHE PATENTSCHRIFT

(11) **EP 0 689 043 B1**
(45) Veröffentlichungstag und Bekanntmachung des Hinweises auf die Patenterteilung: **02.12.1998**
(21) Anmeldenummer: 95810356.6
(22) Anmeldetag: 31.05.1995
(51) Int. Cl.: G01N 1/22, F02C 9/00

(54) **Emissionssonde zur Entnahme von Abgas aus der Brennkammer einer Gasturbine sowie Verfahren zur Herstellung und Anwendung derselben**
Probe for withdrawing exhaust gas from the combustion chamber of a gas turbine, and methods of using and manufacturing same
Sonde pour l'échantillonage des gaz de combustion d'une turbine à gaz, et méthodes de fabrication et d'utilisation d'une telle sonde

(30) Priorität: 22.06.1994 DE 4421807
(43) Veröffentlichungstag der Anmeldung: 27.12.1995
(73) Patentinhaber: ASEA BROWN BOVERI AG, 5400 Baden (CH)
(72) Erfinder: Brunner, Philipp, CH-5502 Hunzenschwil (CH); Tresch, Rudolf, CH-5703 Seon (CH)

(56) Entgegenhaltungen:
- EP-A- 0 463 837
- GB-A- 1 233 325
- GB-A- 1 557 970
- GB-A- 2 041 104
- US-A- 4 986 349

## Beschreibung

### TECHNISCHES GEBIET

Die vorliegende Erfindung bezieht sich auf das Gebiet der Gasturbinen. Sie betrifft eine Emissionssonde zur Entnahme von Abgas aus der Brennkammer einer Gasturbine, umfassend ein Sondenrohr, welches in seinem Inneren einen in Richtung der Rohrachse verlaufenden Emissionskanal sowie zwei parallel zum Emissionskanal und nebeneinander verlaufende Kühlkanäle aufweist.

Eine solche Emissionssonde ist aus der GB-A-1 233 325 bekannt geworden.

### STAND DER TECHNIK

Emissions- bzw. Abgassonden werden überall dort bei Verbrennungsprozessen eingesetzt, wo die Effektivität des Verbrennungsprozesses selbst und der Schadstoffanteil in den Abgasen ermittelt und überwacht werden muss. Probleme ergeben sich dabei vor allem durch die üblicherweise hohen Abgastemperaturen, die beispielsweise bei Gasturbinen weit über 1000°C liegen können und einerseits die Sonde selbst belasten, und andererseits die entnommenen Abgasproben auf unerwünschte Weise (z.B. durch chemische Nachreaktionen) verändern können.

In der Patentschrift GB-B-1 557 970 ist bereits eine Abgassonde für eine Gasturbine angegeben worden, die aus mehreren ineinanderliegenden Rohren aufgebaut ist, wobei das innenliegende Gasentnahmerohr von mehreren konzentrisch angeordneten Kühlkanälen umgeben ist. Die bekannte Abgassonde ist vom Aufbau her sehr aufwendig, weil verschiedene Einzelrohre auf eine Weise zusammengesetzt werden müssen, die den hohen Betriebstemperaturen standhält. Gleichzeitig erschwert diese Art des Aufbaus eine Integration in vorhandene Komponenten der Gasturbine.

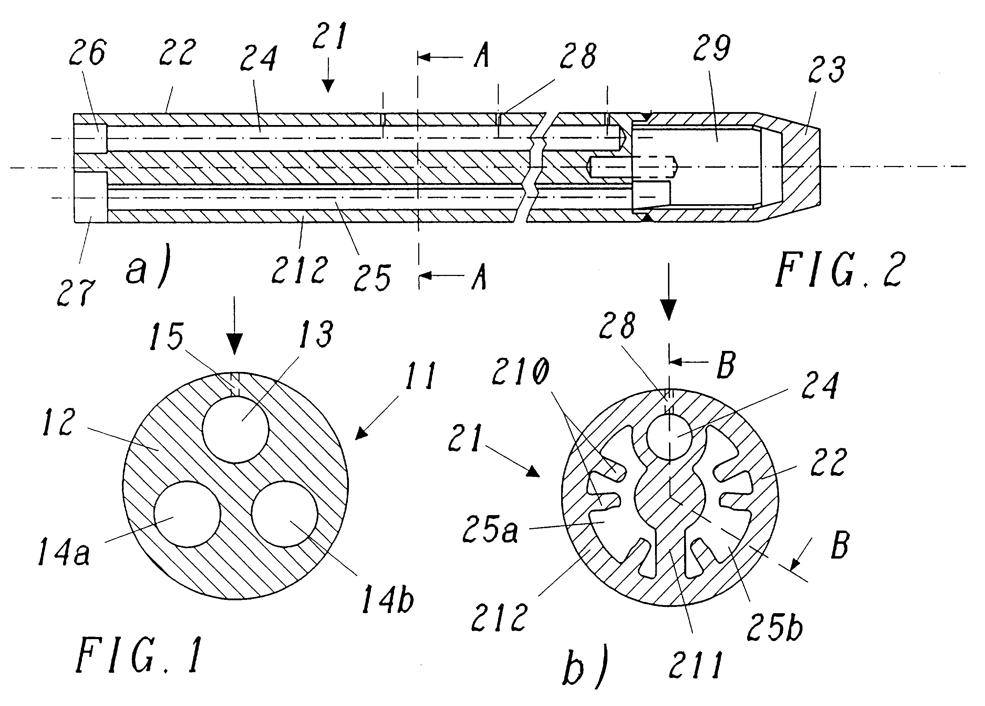

Es ist weiterhin in der Praxis eine einfacher aufgebaute Emissionssonde eingesetzt worden, wie sie in Fig. 1 im Querschnitt dargestellt ist. Die Emissionssonde 11 besteht aus einem einstückigen Sondenrohr 12 in welchem parallel zur Rohrachse an den Eckpunkten eines gleichschenkligen Dreiecks ein Emissionskanal 13 und zwei Kühlkanäle 14a,b mit etwa gleichem Querschnitt angeordnet sind. Der Emissionskanal 13 ist zur Probenentnahme durch Entnahmebohrungen 15 mit dem Aussenraum der Sonde verbunden. Die Sonde wird mit ihrer Achse quer zur Abgasströmung eingebaut, so dass das Abgas die Sonde umströmt. Die Sonde ist so orientiert, dass die Entnahmebohrungen 15 mit ihrer Aussenöffnung direkt im Staupunkt der Strömung liegen. Die Strömungsrichtung ist in Fig. 1 (wie auch in Fig. 2b) angedeutet durch einen senkrechten Pfeil.

Derartige Sonden wurden bereits früher bei Brennkammerversuchen unter Hochdruck benutzt, jedoch genügte die Kühlung den Erfordernissen nicht, weil die Kühlkanäle aus zylindrischen Längsbohrungen bestanden. Dadurch war die Kühlwirkung beschränkt und die Zonen, welche am weitesten von den Kühlkanälen entfernt waren, wurden schnell überhitzt. Dies trifft insbesondere auf die Partie im Staupunkt zu, wo die Bohrungen für die Abgasentnahme liegen. Ein weiterer Nachteil der alten Bauart liegt darin, dass die Sonden durch thermische Differenzdehnungen bleibend verkrümmt werden.

### DARSTELLUNG DER ERFINDUNG

Es ist daher Aufgabe der Erfindung, eine Emissionssonde für Gasturbinen zu schaffen, welche bei gleichzeitig einfachem Aufbau dank optimaler Kühlung eine lange Lebensdauer aufweist, keine thermisch bedingten Verkrümmungen erleidet, und eine Veränderung der entnommenen Abgasproben verhindert, sowie ein Verfahren zu deren Herstellung anzugeben.

Die Aufgabe wird bei einer Emissionssonde der eingangs genannten Art dadurch gelöst, dass die Kühlkanäle im Querschnitt gesehen den Emissionskanal zumindest teilweise einschliessen und das Innere des **einstückigen** Sondenrohres soweit ausfüllen, dass zwischen den Kühlkanälen und dem das Sondenrohr umgebenden Aussenraum auf dem überwiegenden Teil des Rohrumfangs eine Rohrwand mit einer annähernd gleichbleibenden Wandstärke vorhanden ist, und dass eine Mehrzahl von Kühlrippen vorgesehen ist, welche aus der Rohrwand heraus in das Innere der Kühlkanäle ragen.

Der Kern der Erfindung liegt darin, im einstückigen Sondenrohr durch eine geeignete Querschnittsgeometrie der Kanäle und durch den Einsatz von Kühlrippen den Wärmeübergang sowohl zwischen den Kühlkanälen und dem Emissionskanal als auch zwischen den Kühlkanälen und der Aussenwand des Rohres zu optimieren.

Gemäss einer ersten bevorzugten Ausführungsform der Erfindung sind die Kühlrippen jeweils senkrecht zur Rohrwand angeordnet und an der Rohrwand angeformt, weisen die Kühlrippen einen im wesentlichen rechteckigen Querschnitt auf, und verlaufen die Kühlrippen in ihrer Längsrichtung parallel zur Sondenachse. Hierdurch wird bei gleichzeitig guter Kühlung ein vereinfachte Herstellbarkeit der Sonde erreicht.

Eine zweite bevorzugte Ausführungsform der Erfindung zeichnet sich dadurch aus, dass der Emissionskanal am Rande des Sondenrohres angeordnet und durch eine Mehrzahl von Entnahmebohrungen mit dem Aussenraum verbunden ist, und dass die Kühlkanäle unterhalb des Emissionskanals beiderseits und spiegelsymmetrisch zu einer durch den Emissionskanal verlaufenden Mittelebene angeordnet sind. Insbesondere die symmetrische Anordnung der Kühlkanäle führt zu einer weiteren Vergleichmässigung der Temperaturverteilung in der Sonde.

Eine dritte bevorzugte Ausführungsform der erfindungsgemässen Sonde ist dadurch gekennzeichnet, dass der Emissionskanal nach Art einer Sackbohrung innerhalb des Sondenrohres endet, dass die Kühlkanäle durch das Sondenrohr hindurchlaufen und in den geschlossenen Umlenkraum einer Sondenkappe münden, welche das Sondenrohr an seinem in der Brennkammer liegenden Ende abschliesst, und dass am anderen Ende des Sondenrohres Anschlüsse für den Emissionskanal und die Kühlkanäle vorgesehen sind. Durch diesen Aufbau lässt sich die Herstellung weiter vereinfachen.

Weitere Ausführungsformen ergeben sich aus den abhängigen Ansprüchen.

Das erfindungsgemässe Verfahren zur Herstellung der Sonde zeichnet sich dadurch aus, dass die Kühlkanäle mit ihren Kühlrippen aus einem Vollrohr durch Funkenerodieren, vorzugsweise durch Drahterodieren, herausgearbeitet werden.

Erfindungsgemäss wird die Sonde bei einer Gasturbine mit sequentieller Verbrennung zur Messung und Ueberwachung der Abgasemissionen nach der ersten Brennkammer angewendet, wobei vorzugsweise die gewonnenen Messresultate zur Steuerung der Gasturbine zwecks Optimierung des Verbrennungsprozesses und zur Erzielung niedriger Schadstoffemissionen eingesetzt werden.

### KURZE ERLÄUTERUNG DER FIGUREN

Die Erfindung soll nachfolgend anhand von Ausführungsbeispielen im Zusammenhang mit der Zeichnung näher erläutert werden.

Es zeigen
- Fig. 1: den Querschnitt durch eine Emissionssonde, wie sie sich in der Praxis bereits bewährt hat;
- Fig. 2: ein erstes Ausführungsbeispiel für eine Emissionssonde nach der Erfindung im Längsschnitt (a) und im Querschnitt (b);
- Fig. 3: ein Ausführungsbeispiel für eine in eine Turbinenleitschaufel integrierte Sonde nach der Erfindung; und
- Fig. 4: ein Ausführungsbeispiel für eine in eine Rippe innerhalb der Turbine integrierte Sonde nach der Erfindung.

### WEGE ZUR AUSFÜHRUNG DER ERFINDUNG

In Fig. 2 ist ein bevorzugtes Ausführungsbeispiel einer Emissionssonde nach der Erfindung im Längsschnitt (Fig. 2a; Schnittebene B-B aus Fig. 2b) und im Querschnitt (Fig. 2b; Schnittebene A-A aus Fig. 2a) dargestellt. Die Emissionssonde 21 besteht im wesentlichen aus einem Sondenrohr 22 und einer Sondenkappe 23, die an dem in die Brennkammer hineinragenden Ende des Sondenrohres 22 angeschweisst ist. Innerhalb des Sondenrohres 22 sind in der oberen Hälfte ein Emissionskanal 24 (mit kreisrundem Oeffnungsquerschnitt) und darunter zwei Kühlkanäle 25 bzw. 25a und 25b angeordnet.

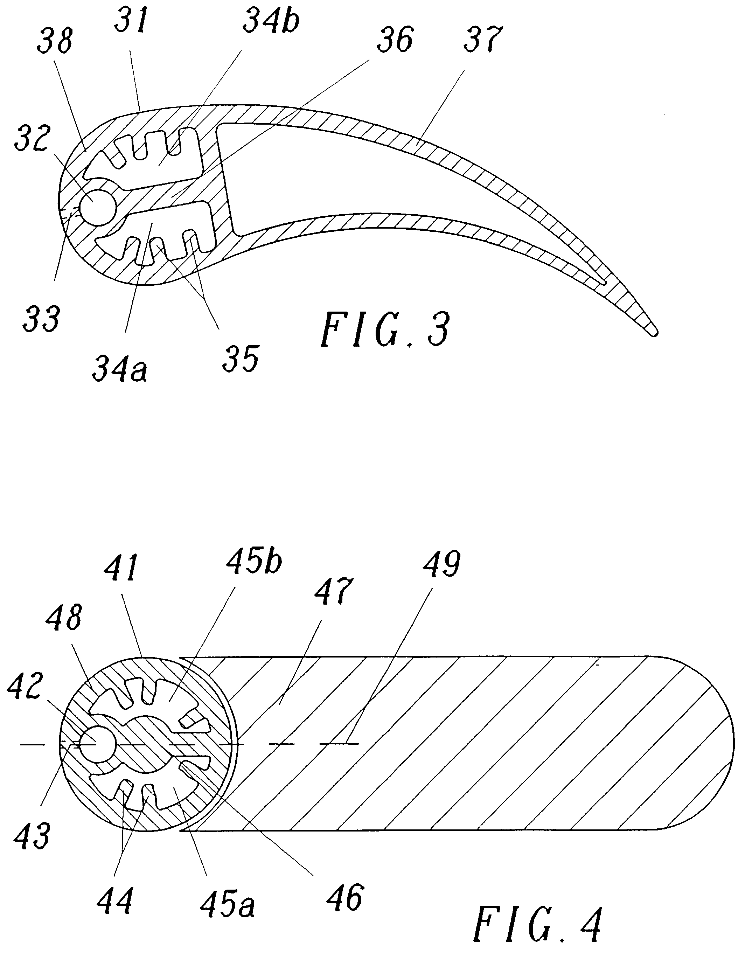

Im Querschnitt (Fig. 2b) gesehen schliessen die Kühlkanäle 25a,b den Emissionskanal 24 teilweise ein und sind vom ihm durch eine relativ dünne, gleichmässige Wand getrennt, so dass der Wärmeübergang zwischen dem Emissionskanal 24 und den Kühlkanälen 25a,b gegenüber der Anordnung aus Fig. 1 wesentlich verbessert ist. Eine vergleichbare Verringerung und Vergleichmässigung der Wandstärke wird auch zwischen den Kühlkanälen 25a,b und dem Aussenraum um die Sonde vorgenommen. Die Kühlkanäle 25a,b füllen dazu - wie in Fig. 2b zu erkennen ist - das Innere des Sondenrohres 22 soweit aus, dass auf dem überwiegenden Teil des Rohrumfangs eine Rohrwand 212 mit annähernd gleichbleibender Wandstärke vorhanden ist. Sie sind dabei spiegelsymmetrisch zu einer durch den Emissionskanal 24 verlaufenen Mittelebene (49 in Fig. 4) angeordnet. Das Sondenrohr ist insgesamt gegenüber Fig. 1 weiter ausgehöhlt, wodurch sich zugleich für das Kühlmedium ein grösserer Strömungsquerschnitt ergibt. Zwischen den Kühlkanälen 25a,b bleibt selbstverständlich eine Trennwand 211 bestehen.

Besonders wichtig für den verbesserten Wärmeübergang zwischen Rohrwand 212 und Kühlkanälen 25a,b sind zusätzliche Kühlrippen 210. Die Kühlrippen 210 sind jeweils senkrecht zur Rohrwand 212 angeordnet und an der Rohrwand angeformt. Sie weisen einen im wesentlichen rechteckigen Querschnitt auf und verlaufen in ihrer Längsrichtung parallel zur Sondenachse. Dank dieser Verrippung ist die Kühlung stark genug, dass die Sonde auch unter extremen Wärmelasten sicher eingesetzt werden kann.

Durch die vergleichsweise dünnwandige Ausführung der Sonde und die Verrippung der Kühlkanäle ergibt sich eine optimale Kühlung, die zu folgenden Vorteilen führt:
- Dank der tiefen Betriebstemperatur ergibt sich eine lange Lebensdauer der Sonde
- Oxidation und Abschmelzen der Sonde im Staupunkt werden verhindert;
- Eine Verkrümmung der Sonde durch thermische Differenzdehnung wird verhindert;
- Das entnommene Abgas wird soweit abgekühlt, dass chemische Nachreaktionen (Ausbrand von CO, UHC, Umwandlung von NO zu NO₂ sowie alle anderen möglichen, hier nicht aufgeführten Reaktionen) verhindert werden; dadurch kann die tatsächliche Abgaszusammensetzung, die am Ort der Probenentnahme, d.h. am Ort der Sonde, vorliegt, analysiert werden.

Der Emissionskanal 24 ist zur Entnahme der Abgasproben mittels einer Vielzahl von Entnahmebohrungen 28, die im Staupunkt der umströmten Sonde enden, mit dem Aussenraum verbunden. Der Emissionskanal 24 endet nach Art einer Sackbohrung innerhalb des Sondenrohres 22 (Fig. 2a). Die Kühlkanäle 25a,b dagegen laufen durch das Sondenrohr 22 hindurch und münden in einen geschlossenen Umlenkraum 29 der Sondenkappe 23. Hier wird das durch den einen Kühlkanal in einer Richtung strömende Kühlmedium (Wasser oder dgl.) umgelenkt und strömt im anderen Kühlkanal in der Gegenrichtung zurück. Am anderen Ende des Sondenrohres sind Anschlüsse 26, 27 für den Emissionskanal 24 und die Kühlkanäle 25a,b vorgesehen.

Da die Kühlkanäle 25a,b mit ihrer komplizierten Randgeometrie (Kühlrippen) mit unverändertem Querschnitt durch das gesamte Sondenrohr 22 hindurchlaufen, können sie auf besonders günstige Weise aus einem Vollrohr durch Funkenerodieren, insbesondere durch Drahterodieren, herausgearbeitet werden. Durch diese Art der Herstellung lassen sich nahezu beliebige Verrippungen und Kanalkonturen realisieren.

Grundsätzlich kann die erfindungsgemässe Emissionssonde als vollkommen eigenständige Sonde in einer Gasturbine verwendet werden. Es ist jedoch auch denkbar, das Sondenrohr als integralen Bestandteil einer heissgasbenetzten Komponente der Brennkammer bzw. Gasturbine auszubilden. Zwei Ausführungsbeispiele für eine solche Integration sind in den Fig. 3 und 4 im Querschnitt wiedergegeben. Im Ausführungsbeispiel der Fig. 3 ist das Sondenrohr 31 mit dem Emissionskanal 32, den Entnahmebohrungen 33, den Kühlkanälen 34a,b, den Kühlrippen 35, der Trennwand 36 und der Rohrwand 38 in den vorderen Teil einer Turbinenleitschaufel integriert. Es versteht sich dabei von selbst, dass die kreisrunde Querschnittsgeometrie hier zugunsten der speziellen Schaufelgeometrie aufgegeben worden ist. Im Ausführungsbeispiel der Fig. 4 ist das Sondenrohr 41 mit dem Emissionskanal 42, den Entnahmebohrungen 43, den Kühlrippen 44, den Kühlkanälen 45a,b, der Trennwand 46 und der Rohrwand 48 in eine (heissgasbenetzte) Rippe 47 integriert. Selbstverständlich kann das Sondenrohr auch Teil von anderen Komponenten sein.

Die oben beschriebene Emissionssonde lässt sich generell bei verschiedenen Gasturbinen oder auch anderen Verbrennungsprozessen einsetzen. Sie wird jedoch speziell bei einer Gasturbine mit sequentieller Verbrennung zur Messung und Ueberwachung der Abgasemissionen nach der ersten Brennkammer eingesetzt. Die dabei gewonnenen Messresultate werden dann bevorzugt zur Steuerung der Gasturbine zwecks Optimierung des Verbrennungsprozesses und zur Erzielung niedriger Schadstoffemissionen verwendet.

Insgesamt ergibt sich mit der Erfindung eine einfache und kompakt aufgebaute, betriebssichere und optimal gekühlte Emissionssonde.

### BEZEICHNUNGSLISTE

- 11: Emissionssonde
- 12: Sondenrohr
- 13: Emissionskanal
- 14a,b: Kühlkanal
- 15: Entnahmebohrung
- 21: Emissionssonde
- 22: Sondenrohr
- 23: Sondenkappe
- 24: Emissionskanal
- 25;25a,b: Kühlkanal
- 26: Anschluss (Emissionskanal)
- 27: Anschluss (Kühlkanal)
- 28: Entnahmebohrung
- 29: Umlenkraum
- 210: Kühlrippe
- 211: Trennwand
- 212: Rohrwand
- 31: Sondenrohr
- 32: Emissionskanal
- 33: Entnahmebohrung
- 34a,b: Kühlkanal
- 35: Kühlrippe
- 36: Trennwand
- 37: Turbinenleitschaufel
- 38: Rohrwand
- 41: Sondenrohr
- 42: Emissionskanal
- 43: Entnahmebohrung
- 44: Kühlrippe
- 45a,b: Kühlkanal
- 46: Trennwand
- 47: Rippe
- 48: Rohrwand
- 49: Mittelebene

## Patentansprüche

1. Emissionssonde (11, 21) zur Entnahme von Abgas aus der Brennkammer einer Gasturbine, umfassend ein Sondenrohr (12, 22, 31, 41), welches in seinem Inneren einen in Richtung der Rohrachse verlaufenden Emissionskanal (13, 24, 32, 42) sowie zwei parallel zum Emissionskanal (13, 24, 32, 42) und nebeneinander verlaufende Kühlkanäle (14a,b; 25; 25a,b; 34a,b; 45a,b) aufweist, dadurch gekennzeichnet, dass die Kühlkanäle (25; 25a,b; 34a,b; 45a,b) im Querschnitt gesehen den Emissionskanal (24, 32, 42) zumindest teilweise einschliessen und das Innere des **einstückigen** Sondenrohres (22, 31, 41) soweit ausfüllen, dass zwischen den Kühlkanälen (25; 25a,b; 34a,b; 45a,b) und dem das Sondenrohr (22, 31, 41) umgebenden Aussenraum auf dem überwiegenden Teil des Rohrumfangs eine Rohrwand (212; 38; 48) mit einer annähernd gleichbleibenden Wandstärke vorhanden ist, und dass eine Mehrzahl von Kühlrippen (210; 35; 44) vorgesehen ist, welche aus der Rohrwand (212; 38; 48) heraus in das Innere der Kühlkanäle (25; 25a,b; 34a,b; 45a,b) ragen.

2. Emissionssonde nach Anspruch 1, dadurch gekennzeichnet, dass die Kühlrippen (210; 35; 44) jeweils senkrecht zur Rohrwand (212; 38; 48) angeordnet und an der Rohrwand (212; 38; 48) angeformt sind, dass die Kühlrippen (210; 35; 44) einen im wesentlichen rechteckigen Querschnitt aufweisen, und dass die Kühlrippen (210; 35; 44) in ihrer Längsrichtung parallel zur Sondenachse verlaufen.

3. Emissionssonde nach einem der Ansprüche 1 und 2, dadurch gekennzeichnet, dass der Emissionskanal (24, 32, 42) am Rande des Sondenrohres (22, 31, 41) angeordnet und durch eine Mehrzahl von Entnahmebohrungen (28, 43) mit dem Aussenraum verbunden ist, und dass die Kühlkanäle (25; 25a,b; 34a,b; 45a,b) unterhalb des Emissionskanals (24, 32, 42) beiderseits und spiegelsymmetrisch zu einer durch den Emissionskanal (24, 32, 42) verlaufenden Mittelebene (49) angeordnet sind.

4. Emissionssonde nach einem der Ansprüche 1 bis 3, dadurch gekennzeichnet, dass der Emissionskanal (24, 32, 42) nach Art einer Sackbohrung innerhalb des Sondenrohres (22, 31, 41) endet, dass die Kühlkanäle (25; 25a,b; 34a,b; 45a,b) durch das Sondenrohr (22, 31, 41) hindurchlaufen und in den geschlossenen Umlenkraum (29) einer Sondenkappe (23) münden, welche das Sondenrohr (22, 31, 41) an seinem in der Brennkammer liegenden Ende abschliesst, und dass am anderen Ende des Sondenrohres (22, 31, 41) Anschlüsse (26, 27) für den Emissionskanal (24, 32, 42) und die Kühlkanäle (25; 25a,b; 34a,b; 45a,b) vorgesehen sind.

5. Emissionssonde nach einem der Ansprüche 1 bis 4, dadurch gekennzeichnet, dass das Sondenrohr (31, 41) als integraler Bestandteil einer heissgasbenetzten Komponente (37, 47) der Brennkammer bzw. Gasturbine ausgebildet ist.

6. Emissionssonde nach Anspruch 5, dadurch gekennzeichnet, dass die heissgasbenetzte Komponente eine Turbinenleitschaufel (37) ist.

7. Emissionssonde nach Anspruch 5, dadurch gekennzeichnet, dass die heissgasbenetzte Komponente eine Rippe (47) ist.

8. Verfahren zur Herstellung einer Emissionssonde nach einem der Ansprüche 1 bis 7, dadurch gekennzeichnet, dass die Kühlkanäle (25; 25a,b; 34a,b; 45a,b) mit ihren Kühlrippen (210; 35; 44) aus einem Vollrohr durch Funkenerodieren, vorzugsweise durch Drahterodieren, herausgearbeitet werden.

9. Anwendung einer Emissionssonde nach einem der Ansprüche 1 bis 7 bei einer Gasturbine mit sequentieller Verbrennung zur Messung und Ueberwachung der Abgasemissionen nach der ersten Brennkammer.

10. Anwendung nach Anspruch 9, dadurch gekennzeichnet, dass die gewonnenen Messresultate zur Steuerung der Gasturbine zwecks Optimierung des Verbrennungsprozesses und zur Erzielung niedriger Schadstoffemissionen eingesetzt werden.

## Claims

1. Emission probe (11, 21) for the removal of exhaust gas from the combustion chamber of a gas turbine, comprising a probe tube (12, 22, 31, 41) which, in its interior, has an emission passage (13, 24, 32, 42) extending in the direction of the tube axis and two cooling passages (14a,b; 25; 25a,b; 34a,b; 45a,b) extending parallel to the emission passage (13, 24, 32, 42) and adjacent to one another, characterized in that, as seen in cross section, the cooling passages (25; 25a,b; 34a,b; 45a,b) at least partially enclose the emission passage (24, 32, 42) and occupy the interior of the one-piece probe tube (22, 31, 41) to an extent such that the wall thickness of the tube wall (212; 38; 48) between the cooling passages (25; 25a,b; 34a,b; 45a,b) and the external space surrounding the probe tube (22, 31, 41) is approximately constant over the majority of the tube circumference, and in that a plurality of cooling ribs (210; 35; 44) is provided, which project from the tube wall (212; 38; 48) into the interior of the cooling passages (25; 25a,b; 34a,b; 45a,b).

2. Emission probe according to Claim 1, characterized in that the cooling ribs (210; 35; 44) are each arranged perpendicular to the tube wall (212; 38; 48) and are formed integrally on the tube wall (212; 38; 48), in that the cooling ribs (210; 35; 44) have an essentially rectangular cross section, and in that, in their longitudinal direction, the cooling ribs (210; 35; 44) extend parallel to the probe axis.

3. Emission probe according to either of Claims 1 and 2, characterized in that the emission passage (24, 32, 42) is arranged at the boundary of the probe tube (22, 31, 41) and is connected to the external space by a plurality of removal holes (28, 43), and in that the cooling passages (25; 25a,b; 34a,b; 45a,b) are arranged underneath the emission passage (24, 32, 42) on both sides of, and in mirror symmetry with respect to, a centre plane (49) extending through the emission passage (24, 32, 42).

4. Emission probe according to one of Claims 1 to 3, characterized in that the emission passage (24, 32, 42) ends within the probe tube (22, 31, 41) in the manner of a blind hole, in that the cooling passages (25; 25a,b; 34a,b; 45a,b) pass through the probe tube (22, 31, 41) and open into the closed deflection space (29) of a probe cap (23) which closes off the probe tube (22, 31, 41) at its end situated in the combustion chamber, and in that connections (26, 27) for the emission passage (24, 32, 42) and the cooling passages (25; 25a,b; 34a,b; 45a,b) are provided at the other end of the probe tube (22, 31, 41).

5. Emission probe according to one of Claims 1 to 4, characterized in that the probe tube (31, 41) is designed as an integral part of a combustion-chamber or gas-turbine component (37, 47) exposed to hot gas.

6. Emission probe according to Claim 5, characterized in that the component exposed to hot gas is a turbine guide vane (37).

7. Emission probe according to Claim 5, characterized in that the component exposed to hot gas is a rib (47).

8. Method for the production of an emission probe according to one of Claims 1 to 7, characterized in that the cooling passages (25; 25a,b; 34a,b; 45a,b) together with their cooling ribs (210; 35; 44) are machined from a solid tube by spark erosion, preferably by wire spark erosion.

9. Use of an emission probe according to one of Claims 1 to 7 in the case of a gas turbine with sequential combustion to measure and monitor the exhaust emissions after the first combustion chamber.

10. Use according to Claim 9, characterized in that the measurement results obtained are used to control the gas turbine for the purpose of optimizing the combustion process and to obtain low pollutant emissions.

## Revendications

1. Sonde d'émission (11, 21) pour le prélèvement de gaz brûlés dans la chambre de combustion d'une turbine à gaz, comprenant un tube de sonde (12, 22, 31, 41), qui présente intérieurement un canal d'émission (13, 24, 32, 42) orienté dans la direction de l'axe du tube ainsi que deux canaux de refroidissement (14a, b; 25; 25a, b; 34a, b; 45a, b) orientés parallèlement au canal d'émission (13, 24, 32, 42) et disposés l'un à côté de l'autre, caractérisée en ce que les canaux de refroidissement (25; 25a, b; 34a, b; 45a, b), vus en section transversale, entourent au moins en partie le canal d'émission (24, 32, 42) et remplissent l'intérieur du tube de sonde en une pièce (22, 31, 41) à un point tel qu'entre les canaux de refroidissement (25; 25a, b; 34a, b; 45a, b) et l'espace extérieur entourant le tube de sonde (22, 31, 41) se trouve, sur la majeure partie de la périphérie du tube, une paroi tubulaire (212; 38; 48) avec une épaisseur de paroi restant approximativement constante, et en ce qu'il est prévu une pluralité d'ailettes de refroidissement (210; 35; 44) qui, partant de la paroi tubulaire (212; 38; 48), pénètrent dans l'intérieur des canaux de refroidissement (25; 25a, b; 34a, b; 45a, b).

2. Sonde d'émission suivant la revendication 1, caractérisée en ce que les ailettes de refroidissement (210; 35; 44) sont disposées perpendiculairement à la paroi tubulaire (212; 38; 48) et sont formées sur la paroi tubulaire (212; 38; 48), en ce que les ailettes de refroidissement (210; 35; 44) présentent une section transversale sensiblement rectangulaire, et en ce que les ailettes de refroidissement (210; 35; 44) ont leur direction longitudinale parallèle à l'axe de la sonde.

3. Sonde d'émission suivant l'une quelconque des revendications 1 et 2, caractérisée en ce que le canal d'émission (24, 32, 42) est disposé au bord du tube de sonde (22, 31, 41) et est relié à l'espace extérieur par une pluralité de trous de prélèvement (28, 43), et en ce que les canaux de refroidissement (25; 25a, b; 34a, b; 45a, b) sont disposés sous le canal d'émission (24, 32, 42), de part et d'autre et symétriquement par rapport à un plan médian (49) passant par le canal d'émission (24, 32, 42).

4. Sonde d'émission suivant l'une quelconque des revendications 1 à 3, caractérisée en ce que le canal d'émission (24, 32, 42) se termine à la manière d'un trou borgne à l'intérieur du tube de sonde (22, 31, 41), en ce que les canaux de refroidissement (25; 25a, b; 34a, b; 45a, b) passent à travers le tube de sonde (22, 31, 41) et débouchent dans l'espace de déviation fermé (29) d'une coiffe de sonde (23), qui ferme le tube de sonde (22, 31, 41) à son extrémité placée dans la chambre de combustion, et en ce qu'à l'autre extrémité du tube de sonde (22, 31, 41) il est prévu des raccords (26, 27) pour le canal d'émission (24, 32, 42) et pour les canaux de refroidissement (25; 25a, b; 34a, b; 45a, b).

5. Sonde d'émission suivant l'une quelconque des revendications 1 à 4, caractérisée en ce que le tube de sonde (31, 41) fait partie intégrante d'un composant (37, 47), balayé par les gaz chauds, de la chambre de combustion, respectivement de la turbine à gaz.

6. Sonde d'émission suivant la revendication 5, caractérisée en ce que le composant balayé par les gaz chauds est une aube directrice (37) de turbine.

7. Sonde d'émission suivant la revendication 5, caractérisée en ce que le composant balayé par les gaz chauds est une ailette (47).

8. Procédé pour la fabrication d'une sonde d'émission suivant l'une quelconque des revendications 1 à 7, caractérisé en ce que les canaux de refroidissement (25; 25a, b; 34a, b; 45a, b) avec leurs ailettes de refroidissement (210; 35; 44) sont usinés hors d'un tube plein par étincelage, de préférence par étincelage par fil.

9. Mise en oeuvre d'une sonde d'émission suivant l'une quelconque des revendications 1 à 7 dans une turbine à gaz à combustion séquentielle, pour la mesure et la surveillance des émissions de gaz brûlés après la première chambre de combustion.

10. Mise en oeuvre suivant la revendication 9, caractérisée en ce que les résultats de mesure obtenus sont utilisés pour la commande de la turbine à gaz dans le but d'optimiser le processus de combustion et pour l'obtention de plus faibles émissions de polluants.
